# EUROPÄISCHE PATENTANMELDUNG

(11) **EP 1 600 762 A2**
(43) Veröffentlichungstag der Anmeldung: **30.11.2005**
(21) Anmeldenummer: 05011233.3
(22) Anmeldetag: 24.05.2005
(51) Int. Cl.: G01N 21/88, G02B 27/00

(54) **Vorrichtung zur Bilderfassung**

(30) Priorität: 25.05.2004 DE 102004025666
(71) Anmelder: LSC Process- und Laborsysteme GmbH, 56566 Neuwied (DE)
(72) Erfinder: Windheuser, Richard, 56566 Neuwied (DE)
(74) Vertreter: Jung HML

(57) **Zusammenfassung**

Die Erfindung betrifft eine Vorrichtung zur Bilderfassung, insbesondere in Materialbahn-Inspektionsanlagen, mit einer Kamera (10), einem Schutzgehäuse (13) für die Kamera (10), in welchem die Kamera (10) eingeschlossen und ein Fenster (18) für die Abbildungsoptik (12) der Kamera (10) vorgesehen ist. Um zu verhindern, dass Schmutz aus der Umgebung der Bilderfassungsvorrichtung in das Schutzgehäuse eindringt und die Abbildungsoptik der Kamera verschmutzt, ist erfindungsgemäß vorgesehen, dass das Fenster in Gestalt eines offenen Durchbruches (18) den Auslass für ein gasförmiges Medium bildet, das in das Schutzgehäuse (13) über einen Einlass (17) unter Überdruck eingespeist wird.

## Beschreibung

Die vorliegende Erfindung betrifft eine Vorrichtung zur Bilderfassung, insbesondere in Materialbahn-Inspektionsanlagen, mit einer Kamera, einem Schutzgehäuse für die Kamera, in welchem die Kamera eingeschlossen und ein Fenster für die Abbildungsoptik der Kamera vorgesehen ist.

Eine derartige Bilderfassungsvorrichtung dient beispielsweise als Analysewerkzeug zur Produktivitätssteigerung bei der Pulpen- und Papierherstellung sowie beim Verarbeiten von Papierbahnen und dergleichen, wie etwa beim Bedrucken von Papierbahnen. Allgemein wird mit der Bilderfassungsvorrichtung die Prozessregelung durch Bildanalyse unterstützt. Im Einzelnen wird mit der Bilderfassungsvorrichtung das Bahnflattern im Randbereich überwacht, die Bandspannung, das Bahnwandern und die Effekte auf der Bahn, wie die Struktur der Bahn werden analysiert. Insbesondere wird ein Bahnabriss rechtzeitig und schnell erkannt. Ferner dient die in Rede stehende Bilderfassungsvorrichtung im Zusammenhang mit Materialbahnen zur Überwachung des Ablösepunkts der Bahn von Walzen und dergleichen.

Am Einsatzort ist die in Rede stehende Bilderfassungsvorrichtung extremen Umgebungsbedingungen ausgesetzt, insbesondere starker Verschmutzung und relativ hoher Temperatur. Im Zusammenhang mit dem Verschmutzungsproblem ist es bekannt, Maßnahmen zu ergreifen, um die Abbildungsoptik der Bilderfassungsvorrichtung vor Verschmutzung zu schützen. Zu diesem Zweck ist herkömmlicherweise das Fenster durch eine Glasscheibe oder eine ähnliche für Abbildungslicht durchlässige Scheibe verschlossen und diese Scheibe wird von außen durch eine Reinigungseinrichtung gereinigt, wie etwa mechanisch durch einen Scheibenwischer oder hydromechanisch mit Hilfe von auf die Scheibe gesprühtem Reinigungsfluid. Diese bekannten Reinigungsmaßnahmen sind sämtliche relativ aufwändig und wartungsbedürftig. Es besteht deshalb ein Bedarf an einer verbesserten Reinigungsmaßnahme für die Abbildungsoptik der in Rede stehenden Bilderfassungsvorrichtung.

Eine Aufgabe der vorliegenden Erfindung besteht deshalb darin, eine Vorrichtung zur Bilderfassung der eingangs genannten Art zu schaffen, die mit relativ geringem Aufwand und im Wesentlichen wartungsfrei gewährleistet, dass die Abbildungsoptik der Kamera auch in kritischer Umgebung vor Verschmutzung geschützt ist.

Gelöst wird diese Aufgabe durch die Merkmale des Anspruchs 1. Vorteilhafte Weiterbildungen der Erfindung sind in den Unteransprüchen angegeben.

Ausgehend vom Stand der Technik mit Fensterscheiben vor der Abbildungsoptik der Kamera und einer Reinigungseinrichtung für diese Scheibe sieht die Erfindung mit anderen Worten ein offenes Fenster in Gestalt eines Durchbruchs im Schutzgehäuse vor der Abbildungsoptik der Kamera vor, aus welchem ein gasförmiges Medium im Innern des Schutzgehäuses unter Druck ausgetragen wird. Aufgrund dieser auswärts gerichteten Gaszwangsströmung wird Schmutz im Bereich des Schutzgehäuses wirksam davon abgehalten, in das Schutzgehäuse einzudringen und die Abbildungsoptik der Kamera zuzusetzen. Die Scheibe beim Stand der Technik und die Reinigungseinrichtung für diese Scheibe können dadurch entfallen, und da der aus dem Schutzgehäuse heraus gerichtete Gasstrom zuverlässig verhindert, dass Schmutz in das Schutzgehäuse eindringt, wird gewährleistet, dass die Abbildungsoptik der Kamera stets, auch bei starker Verschmutzung in der Umgebung der Bilderfassungsvorrichtung funktionsfähig bleibt.

Die Abbildungsoptik sitzt erfindungsgemäß in einem Gasstrom, der verhindert, dass Schmutz in das Schutzgehäuse eindringt und die Abbildungsoptik der Kamera verschmutzt. Diese schmutzabweisende Zwangsströmung des gasförmigen Mediums aus dem Schutzgehäuse heraus kann besonders wirksam gewährleistet werden, wenn die Abmessung des Fensterdurchbruchs und der Überdruck des gasförmigen Mediums im Schutzgehäuse aufeinander derart abgestimmt sind, dass der Fensterdurchbruch Düsenwirkung auf das gasförmige Medium auswirkt. Beispielsweise kann zu diesem Zweck das Schutzgehäuse im Bereich des Fensterdurchbruchs insgesamt düsenförmig gebildet sein mit einem nach außen konvergierenden Wandabschnitt des Schutzgehäuses, in dessen Zentrum der Fensterdurchbruch angeordnet ist. Der entsprechend konisch ausgebildete Schutzgehäuseabschnitt, bevorzugt das Abschlussende des Schutzgehäuses, ist beispielsweise konisch gebildet, wobei die Form dieses Konus dazu beiträgt, dass der gewünschte Staudruck am Fensterdurchbruch erzeugt wird, der dafür sorgt, dass durch den Fensterdurchbruch von außen keinerlei Schmutz in das Schutzgehäuse eindringen kann.

Der Fensterdurchbruch ist also bevorzugt in Art einer Düsenöffnung bzw. als Stiftloch (Pin-Hole) gebildet und die Optik der Kamera ist hieran angepasst eine kommerziell erhältliche Stiftloch-Optik mit Linsen extrem kleinen Durchmessers.

Die schmutzabweisende Wirkung des auswärts gerichteten Gasstroms wird bevorzugt dadurch optimiert, dass die Optik der Kamera unter Belassung eines engen Spalts sich an die Begrenzung des Fensterdurchbruchs einwärts von diesem gelegen anschließt bzw. in diesem und damit im Strom des ausströmenden gasförmigen Mediums sitzt.

Die erfindungsgemäße schmutzabweisende Maßnahme eines aus dem Schutzgehäuse herausgerichteten Gaszwangsstroms hat zusätzlich zur Sauberhaltung der Abbildungsoptik der Kamera den Vorteil, dass die Kamera durch diesen Gasstrom gekühlt wird. Um den gesamten Kamerakörper und die Optik der Kamera durch den Gaszwangsstrom optimal zu kühlen wird das gasförmige Medium durch einen relativ engen Ringraum zwischen der Kamera und dem Schutzgehäuse in Kontakt mit der Kamera zum Auslass in Gestalt des Fensterdurchbruchs geführt. Um die gesamte Kamera auf diese Weise zu kühlen, ist bevorzugt der Einlass für das gasförmige Medium in das Schutzgehäuse an dem dem Fensterdurchbruch gegenüberliegenden Ende des Schutzgehäuses vorgesehen.

Bei dem gasförmigen Medium handelt es sich nicht zuletzt aus Kostengründen bevorzugt um Druckluft, d. h., um unter Druck stehende Luft, die sauber bereit gestellt bzw. gefiltert und in das Schutzgehäuse eingespeist wird.

Um die Düsenwirkung im Bereich des Fensterdurchbruchs in der erwünschten Weise zu erzielen, um damit Schmutz am Eindringen in das Schutzgehäuse zu hindern, ist das Schutzgehäuse selbst bevorzugt allgemein zylinderförmig gebildet und der Fensterdurchbruch sitzt in einer bevorzugt konisch nach außen verjüngt verlaufenden Stirnseite des zylindrischen Schutzgehäuses.

Das Schutzgehäuse besteht bevorzugt angesichts des Einsatzbereichs in stark verschmutzter Umgebung, die außerdem thermisch belastet sein kann, aus einem Stahlgehäuse, bevorzugt einem V4A-Stahlgehäuse.

Die erfindungsgemäße Bilderfassungseinrichtung kann allgemein überall dort zum Einsatz kommen, wo Bildgewinnung unter extremen Umgebungsbedingungen erforderlich ist. Bevorzugt ist die Verwendung der Bilderfassungseinrichtung in einer Materialbahninspektionsanlage zur Inspektion einer Materialbahn, beispielsweise einer Papierbahn.

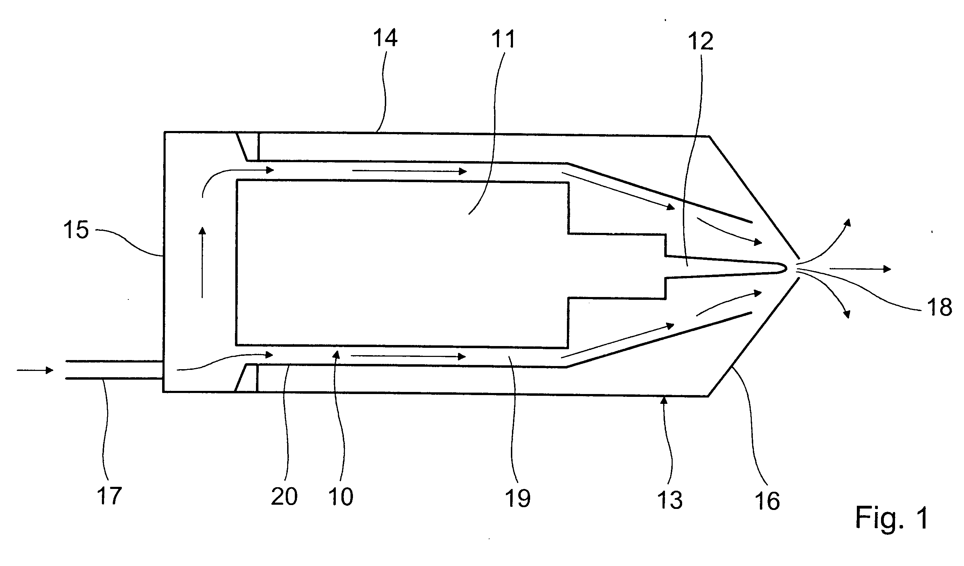

Nachfolgend wird die Erfindung anhand einer einzigen Figur erläutert.

Diese Figur zeigt schematisch im Längsschnitt eine bevorzugte Ausführungsform der erfindungsgemäßen Bilderfassungsvorrichtung. Die Bilderfassungsvorrichtung, die insbesondere zum Einsatz in Materialbahninspektionsanlagen bestimmt ist, umfasst eine Kamera 10 mit einem Kamerakörper 11 und einer Stiftlochabbildungsoptik 12. Für die Kamera 10 ist ein Schutzgehäuse 13 vorgesehen, in welchem die Kamera 10 vollständig eingeschlossen angeordnet ist. Das Schutzgehäuse 13 ist bevorzugt allgemein zylinderförmig gebildet und umfasst demnach einen Zylindermantel 14, der beidendig durch eine Stirnwand 15 und einem dieser gegenüberliegenden konischen Abschlussende 16 verschlossen ist. In der Stirnwand 15 ist ein Einlassstutzen 17 für Druckluft vorgesehen, durch den Druckluft in das Innere des Schutzgehäuses 13 eingespeist wird. Das sich nach außen konisch verjüngende Abschlussende 16 weist zentral einen Durchbruch 18 in Gestalt eines Stiftloches auf, welcher mit der Abbildungsoptik 12 fluchtet und vorliegend auch als Fensterdurchbruch bezeichnet wird in Anlehnung an das herkömmlicherweise vor der Abbildungsoptik 12 im Schutzgehäuse 13 vorgesehene Fenster. Der Druchbruch 18 dient als Auslass für die über den Einlassstutzen 17 in das Schutzgehäuse 14 eingespeiste Druckluft.

Der Strömungsverlauf der Druckluft im Schutzgehäuse sowie am Auslass des Schutzgehäuses (Durchbruch 18) ist mit Pfeilen symbolisiert. Im Einzelnen strömt die über den Einlassstutzen 17 eingespeiste Druckluft entlang der Kamera 10 in Kontakt mit dieser zum Durchbruch 18, durch welchen die Druckluft austritt. Im Schutzgehäuse 13 sind außerdem Strömungsleitmittel vorgesehen, die zusammen mit der Außenseite der Kamera 10 einen Ringraum 19 festlegen. Diese Leitmittel umfassen im Einzelnen einen im Wesentlichen zylindrischen, der Kontur der Kamera 19 folgenden Innenzylinder 10, der dafür sorgt, dass der Ringraum 19 die Kamera 10 ausreichend eng umschließt, um eine entsprechend hohe Strömungsgeschwindigkeit der Druckluft in diesem Ringraum zu gewährleisten, um dadurch Wärme von der Kamera mittels der Druckluft wirksam ableiten zu können.

Alternativ kann der Innenzylinder 20 entfallen und der Ringraum 19 ist festgelegt durch die Außenseite der Kamera 10 und die Innenseite des Schutzgehäuses 13.

Der Fensterdurchbruch 18 ist, wie vorstehend angesprochen, bei der gezeigten Ausführungsform als Stiftloch bzw. Düsenloch gebildet, dessen Durchmesser in etwa dem Durchmesser der Abschlusslinse der Abbildungsoptik 12 der Kamera 10, die einwärts vom konischen Abschlussende 16 des Schutzgehäuses 13 unmittelbar benachbart zum Durchbruch 18 zu liegen kommt bzw. in diesen hinein ragt.

Der Durchbruch 18 und der Überdruck der über den Anschlussstützen 17 eingespeisten Druckluft sind so aufeinander abgestimmt, dass der Durchbruch 18 Düsenwirkung auf die Druckluft auswirkt, die mit dem Durchbruch 18 düsenförmig beschleunigt austritt. Zur Düsenwirkung trägt die konische Ausbildung des Abschlussendes 16 des Schutzgehäuses 13 bei.

Die Strömung der über den Durchbruch 18 austretenden Druckluft ist so groß gewählt, dass gewährleistet ist, dass die Umgebungsluft des Schutzgehäuses 13 nicht in den Durchbruch 18 einzutreten vermag, wodurch auch verhindert wird, dass in der Umgebungsluft enthaltene Verschmutzung nicht in das Schutzgehäuse 13 eindringt und insbesondere nicht die Abbildungsoptik 12 (deren stirnseitige Linse) verschmutzt.

### Bezugszeichenliste

- 10: Kamera
- 11: Kamerakörper
- 12: Abbildungsoptik
- 13: Schutzgehäuse
- 14: Zylindermantel
- 15: Stirnwand
- 16: konisches Abschlussende
- 17: Einlassstutzen
- 18: Durchbruch
- 19: Ringraum
- 20: Innenzylinder

## Patentansprüche

1. Vorrichtung zur Bilderfassung, insbesondere in Materialbahn-Inspektionsanlagen, mit einer Kamera (10), einem Schutzgehäuse (13) für die Kamera (10), in welchem die Kamera (10) eingeschlossen und ein Fenster (18) für die Abbildungsoptik (12) der Kamera (10) vorgesehen ist,
**dadurch gekennzeichnet, dass**
das Fenster in Gestalt eines offenen Durchbruches (18) den Auslass für ein gasförmiges Medium bildet, das in das Schutzgehäuse (13) über einen Einlass (17) unter Überdruck eingespeist wird.

2. Vorrichtung nach Anspruch 1, **dadurch gekennzeichnet, dass** die Abmessung des Fensterdurchbruchs (18) und der Überdruck des gasförmigen Mediums derart aufeinander abgestimmt sind, dass der Fensterdurchbruch (18) Düsenwirkung auf das gasförmige Medium ausübt.

3. Vorrichtung nach Anspruch 1 oder 2, **dadurch gekennzeichnet, dass** der Fensterdurchbruch (18) in einem nach außen konvergierenden Wandabschnitt (16) des Schutzgehäuses (13) gebildet ist.

4. Vorrichtung nach Anspruch 3, **dadurch gekennzeichnet, dass** der konvergierende Wandabschnitt (16) ein konisches Abschlussende des Schutzgehäuses (13) bildet.

5. Vorrichtung nach einem der Ansprüche 1 bis 4, **dadurch gekennzeichnet, dass** die Abbildungsoptik (12) der Kamera (10) eine Stiftloch-Optik ist, und dass der Fensterdurchbruch (18) ein der Optik vorgesetztes Stiftloch im Schutzgehäuse (13) ist.

6. Vorrichtung nach einem der Ansprüche 1 bis 5, **dadurch gekennzeichnet, dass** die Abbildungsoptik (12) der Kamera (10) unter Belassung eines engen Spaltes sich an die Begrenzung des Fensterdurchbruchs (18) einwärts von diesem gelegen anschließt bzw. in diesem und damit im Strom des ausströmenden gasförmigen Mediums sitzt.

7. Vorrichtung nach einem der Ansprüche 1 bis 6, **dadurch gekennzeichnet, dass** das gasförmige Medium durch einen Ringraum (19) zwischen der Kamera (10) und dem Schutzgehäuse (13)in Kontakt mit der Kamera (10) geführt ist.

8. Vorrichtung nach einem der Ansprüche 1 bis 7, **dadurch gekennzeichnet, dass** der Einlass (17) für das gasförmige Medium am dem Fensterdurchbruch (18) gegenüberliegenden Ende des Schutzgehäuses (13) vorgesehen ist.

9. Vorrichtung nach einem der Ansprüche 1 bis 8, **dadurch gekennzeichnet, dass** das gasförmige Medium Druckluft ist.

10. Vorrichtung nach einem der Ansprüche 1 bis 9, **dadurch gekennzeichnet, dass** das Schutzgehäuse (13) allgemein zylinderförmig gebildet ist.

11. Verwendung der Bilderfassungsvorrichtung nach einem der Ansprüche 1 bis 10 in einer Materialbahn-Inspektionsanlage zur Inspektion einer Materialbahn.
